Europäisches Patentamt

European Patent Office

Office européen des brevets

(11) Veröffentlichungsnummer: **0 373 244**
**A1**

(12) ## EUROPÄISCHE PATENTANMELDUNG

(21) Anmeldenummer: **88120854.0**

(51) Int. Cl.⁵: **H01B 1/02**

(22) Anmeldetag: **14.12.88**

(43) Veröffentlichungstag der Anmeldung:
**20.06.90 Patentblatt 90/25**

(84) Benannte Vertragsstaaten:
**AT BE CH DE ES FR GB GR IT LI LU NL SE**

(71) Anmelder: **Siemens Aktiengesellschaft**
**Wittelsbacherplatz 2**
**D-8000 München 2(DE)**

(72) Erfinder: **Utner, Ferdinand**
**Roter Brachweg 99**
**D-8400 Regensburg(DE)**
Erfinder: **Hieber, Udo**
**Knupfertal 94**
**D-7920 Heidenheim-Schnaitheim(DE)**

(54) **Elektrischer Kondensator.**

(57) Ein Kondensatorwickel (1) ist in ein metallisches Gehäuse (2) eingebaut, das durch einen Deckel (4) feuchte- und gasdicht verschlossen ist. Im Deckel (4) sind Durchführungen (6, 7) angeordnet, die einen Abstand X voneinander besitzen. Der Deckel (4) weist eine Kugelkalottenform mit nach außen gerichteter Wölbung auf.

FIG 1

EP 0 373 244 A1

# Elektrischer Kondensator

Die Erfindung betrifft einen elektrischen Kondensator, insbesondere Leistungskondensator, der in ein metallisches Gehäuse eingebaut ist, das durch einen mit dem Gehäuse feuchte- und gasdicht verbundenen Deckel verschlossen ist und bei dem im Deckel zumindest eine elektrisch isolierte Durchführung für die Kondensatoranschlüsse angeordnet ist.

Ein derartiger Kondensator ist aus der DE 28 25 377 C2 bekannt.

Bei zu großer Wärmeentwicklung im Kondensatorwickel bzw. bei der Entstehung gasförmiger Zersetzungsprodukte durch Selbstheilprozesse bei mit Öl imprägnierten Kondensatoren kann im Gehäuse ein Überdruck enstehen. Um diesen nicht zu groß werden zu lassen (Gehäusebeschädigung, Explosionsgefahr), weisen diese Kondensatoren Überdruckabreißsicherungen auf, die beispielsweise aus in Drähten bzw. Zuleitungen angeordneten Sollbruchstellen mit Querschnittsverringerung bestehen. Die Stromleiter werden dabei über eine Bodenverankerung bei einer durch überhöhten Innendruck auftretenden Bodenverformung abgerissen und somit die Stromzufuhr unterbrochen.

Wegen der Falzverbindung zwischen Deckel und Gehäuse muß der Deckel mit den eingelöteten Durchführungen ungefähr aus derselben Materialdicke wie das Gehäuse gefertigt werden. Hinzu kommt, daß wegen der einzulötenden Durchführungen (Keramikisolatoren), sowie wegen der in diesem Bereich wirksamen Wechselfelder ein nicht magnetisches, lötbares Material (z.B. Messing, verzinnt) verwendet werden muß, daß eine geringere Festigkeit als Stahl besitzt.

Bedingt durch diese Einschränkungen in Materialdicke und Materialart tritt bereits vor Erreichen des Abschaltdruckes eine starke Deckelverformung auf. Da sich aber mit der Deckelverformung bei z.B. zwei Durchführungen gleichzeitig auch der Abstand der Durchführungen unzulässig stark ändert bzw. bei nur einer Durchführung diese Durchführung sich schrägstellen kann, muß der Deckel wesentlich versteift werden.

Zur Versteifung wurden deshalb bisher Rippen in den verschiedensten Formen, Größen und Anordnungen in den Deckel eingeprägt. Die dadurch erreichten Verringerungen der Verformungen waren trotzdem unbefriedigend bzw. nicht ausreichend.

Aufgabe der Erfindung ist es daher, den eingangs genannten Kondensator derart weiterzubilden, daß auch bei Druckanstieg im Kondensatorgehäuse der Durchführungsabstand bzw. bei einer Durchführung die Auslenkung um nicht mehr als 10 % verändert wird.

Diese Aufgabe wird erfindungsgemäß dadurch gelöst, daß der Deckel eine Kugelkalottenform mit nach außen gerichteter Wölbung besitzt.

Zweckmäßigerweise sind Deckel und Gehäuse mittels einer Falzung miteinander verbunden bzw. miteinander verschweißt.

Die Vorteile des Gegenstandes der Erfindung werden anhand der folgenden Ausführungsbeispiele näher erläutert.

In der dazugehörenden Zeichnung zeigt

FIG 1 einen Ausschnitt eines Kondensatorgehäuses mit Deckel und

FIG 2 bis FIG 4 verschiedene Verbindungsarten zwischen Deckel und Gehäuse.

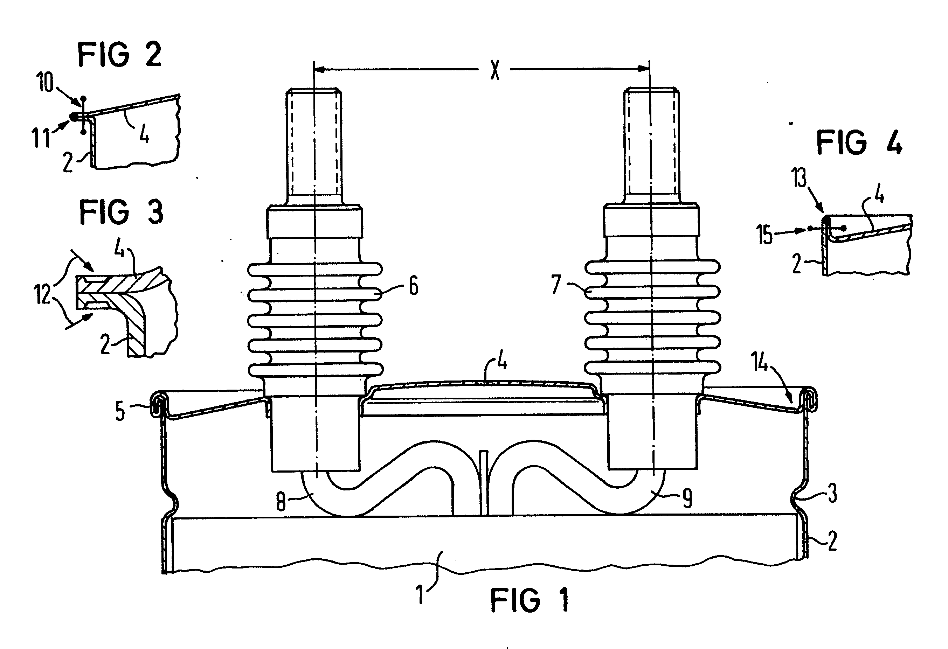

In der FIG 1 ist ein Kondensatorwickel 1 dargestellt, der in ein metallisches Gehäuse 2 eingebaut ist. Der Wickel 1 ist im Gehäuse 2 beispielsweise durch eine Sicke 3 fixiert. Das Gehäuse 2 ist durch einen Deckel 4 feuchte- und gasdicht verschlossen.

Der Deckel 4 besitzt eine Kugelkalottenform mit nach außen gerichteter Wölbung. Gehäuse 2 und Deckel 4 sind mittels einer Falzverbindung 5 miteinander verbunden.

Im Deckel 4 sind Durchführungen 6, 7 angeordnet, die aus eingelöteten oder dicht eingeklebten oder eingenieteten Keramik oder Kunststoff-Isolatorenkörpern bestehen. Im Inneren des Gehäuses 2 sind Zuleitungen 8, 9 für den Kondensatorwickel 1 angeordnet.

Die Durchführungen 6, 7 weisen einen Abstand X voneinander auf.

Ein Gehäuse mit einem Durchmesser von 176 mm wurde mit einem Messingdeckel (Dicke 0,7 bis 0,8 mm) verschlossen. Der Abstand X der Zuführungen 6, 7 betrug 100 mm.

Bei der Prüfung unter Druck vergrößerte sich der Durchführungsabstand X bei einer gefalzten Ausführung bei 2 bar nur um ca. 7 % und bei 3 bar um ca. 10 %.

Zum Vergleich wurde ein Kondensatorgehäuse der gleichen Größe mit dem üblichen ebenen Deckel verschlossen. Bei einem Innendruckanstieg von 2 bar änderte sich der Durchführungsabstand X um 25 % bei Deckeln, die mit parallelen Rippen verstärkt waren bzw. um 20 % bei sternförmig angeordneten Rippenverstärkungen.

Bei Erhöhung des Abschaltdrucks auf etwa 3 bar änderte sich der Durchführungsabstand X auf Werte von 38 % (Parallelrippen) bzw. 30 % (sternförmige bzw. radial angeordnete Rippen).

Selbst mit eingezogenen bzw. eingeschweißten 2 bis 3 mm dicken (massiven) Stahlblechen konnte die geforderte maximale Abstandsänderung von 10 % bei weitem nicht erreicht werden, vielmehr änderte sich der Durchführungsabstand um 18 bzw. 26 %.

Aus den Ausführungsbeispielen ist ersichtlich, daß durch die erfindungsgemäß ausgestaltete ballige Form des Deckels 4 überraschenderweise auch ohne Rippenverstärkung eine weitaus geringere Änderung des Durchführungsabstandes X erreicht wird. Hier bei läßt sich eine weitere Verbesserung, d.h. Verringerung des Abstandes X, erreichen, wenn anstatt des im Ausführungsbeispiel geprüften Messingdeckels unmagnetische Edelstahldeckel (partiell verzinnt im Einlötbereich der Keramikdurchführungen) verwendet werden.

In der FIG 2 ist dargestellt, daß Deckel 4 und Gehäuse 2 an der Stelle 10 durch eine Rollennahtschweißung und an der Stelle 11 durch eine Schutzgas- bzw. Plasmaschweißung miteinander verbunden sind.

In der FIG 3 ist eine Ausführungsform dargestellt, bei der Deckel 4 und Gehäuse 2 mittels einer Kaltpreßschweißung 12 oder Schutzgasschweißung miteinander verbunden sind.

In der FIG 4 sind Deckel 4 und Gehäuse 2 mit hochstehendem Rand durch eine Schutzgas- oder Plasmaschweißung an der Stelle 13 miteinander verbunden. Die Schutzgasschweißung kann beispielsweise als Wolfram-Inertgas (WIG)-Schweißung durchgeführt werden.

Auch eine kombinierte Schutzgas- 13 /Rollnahtschweißung 14 ist möglich und vorteilhaft, da dadurch ein Aufklappen des Flansches unter Druckbelastung größtenteils vermieden wird.

Die günstigsten Deckelformen ergeben sich dabei für mit dem Gehäuse 2 durch Rollennaht- (FIG 2) oder Kaltpreßschweißen (FIG 3) gefügte verbundene Deckel 4, wobei natürlich die Formen auch mit anderen Schweißverfahren (z.B. WIG-, Plasma- oder Laserschweißen etc.) einzeln oder in Kombination mit dem Rollennaht- oder Kaltpreßschweißen gefügt werden können.

Bei der in der FIG 1 dargestellten Verbindung mittels des Falzes 5 muß die notwendige ringförmige Aussparung für die Glocke (Teil des Falzwerkzeuges) in diesem Bereich ebenfalls ballig sein, da sonst dieser Bereich zur Verformung des Deckels 4 unter Druck überproportional beiträgt.

Neben den in den Ausführungsbeispielen angeführten Materialien Messing und Stahl für den Deckel 4 können auch andere Materialien wie Aluminium oder Cupal (Al-Cu) verwendet werden.

Der Gegenstand der Erfindung eignet sich für alle in Gehäuse eingebaute Kondensatoren, bei denen unter Druckanstieg im Gehäuse nur eine geringfügige Änderung des Durchführungsabstandes eintreten darf, wie es beispielsweise beim Einbau unter beengten Platzverhältnissen erforderlich ist.

## Ansprüche

1. Elektrischer Kondensator, insbesondere Leistungskondensator, der in ein metallisches Gehäuse eingebaut ist, das durch einen mit dem Gehäuse feuchte- und gasdicht verbundenen Deckel verschlossen ist und bei dem im Deckel zumindest eine elektrisch isolierte Durchführung für die Kondensatoranschlüsse angeordnet ist, **dadurch gekennzeichnet,** daß der Deckel (4) eine Kugelkalottenform mit nach außen gerichteter Wölbung besitzt.

2. Elektrischer Kondensator nach Anspruch 1, **dadurch gekennzeichnet,** daß Deckel (4) und Gehäuse (2) mittels einer Falzung (5) miteinander verbunden sind.

3. Elektrischer Kondensator nach Anspruch 1 oder 2, **dadurch gekennzeichnet,** daß Deckel (4) und Gehäuse (2) miteinander verschweißt sind.

FIG 2

FIG 3

FIG 4

X

6

7

5

8

9

3

2

1

FIG 1

EP 0 373 244 A1

10

11

2

4

4

12

2

4

13

15

2

4

14

EUROPÄISCHER RECHERCHENBERICHT

Europäisches
Patentamt

Nummer der Anmeldung

EP 88 12 0854

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C- 507 554 (TELEPHON-APPARAT-FABRIK E. ZWEITUSCH & CO.) * Figur * --- | 1 | H 01 G 1/02 |
| A | FR-A-1 143 821 (H. SCHMIDT) --- | | |
| A | DE-C- 891 297 (R. BOSCH) * Seite 2, Zeilen 11-30; Figur * --- | 3 | |
| A | DE-A-2 802 935 (GENERAL ELECTRIC CO.) * Figuren 3-6 * --- | 1,2 | |
| A | EP-A-0 093 455 (DUCATI ELETTROTECNICA.) ----- | | |

|  | RECHERCHIERTE SACHGEBIETE (Int. Cl.5) |
|---|---|
|  | H 01 G H 01 M |

Der vorliegende Recherchenbericht wurde für alle Patentansprüche erstellt

| Recherchenort | Abschlußdatum der Recherche | Prüfer |
|---|---|---|
| DEN HAAG | 19-07-1989 | SCHUERMANS N.F.G. |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
     Dokument

EPO FORM 1503 03.82 (P0403)